# FASCICULE DE BREVET EUROPEEN

(11) **EP 4 056 428 B1**
(45) Date de publication et mention de la délivrance du brevet: **23.10.2024**
(21) Numéro de dépôt: 22161457.1
(22) Date de dépôt: 10.03.2022
(51) Int. Cl.: B60R 13/02, B60N 2/58

(54) **PROCÉDÉ DE FABRICATION D'UNE NAPPE DE DÉCORATION POUR HABITACLE DE VÉHICULE**
VERFAHREN ZUR HERSTELLUNG EINER DEKORMATTE FÜR DEN INNENRAUM EINES FAHRZEUGS
METHOD FOR MANUFACTURING A DECORATIVE LAYER FOR A VEHICLE PASSENGER COMPARTMENT

(30) Priorité: 11.03.2021 FR 2102416
(43) Date de publication de la demande: 14.09.2022
(73) Titulaire: Eurostyle Systems Tech Center France, 36000 Châteauroux (FR)
(72) Inventeur: RITTER, Herbert, 97082 WUERZBURG (DE); TIRLEMONT, Christophe, 36330 LE POINÇONNET (FR)
(74) Mandataire: Berger, Helmut

(56) Documents cités:
- EP-A1- 3 103 678
- FR-A1- 3 086 225
- GB-A- 796 614
- US-A1- 2013 147 228

## Description

L'invention a trait à l'habillage intérieur des véhicules fermés, notamment les véhicules automobiles. Elle vise plus particulièrement l'habillage du tableau de bord, de la face intérieure des portières ou d'autres surfaces de l'habitacle par des matériaux d'habillage surfacique - ou recouvrement - souples de la famille des textiles tissés ou non tissés, naturels ou synthétiques, incluant les étoffes de microfibres, ou encore de la famille des cuirs, naturels ou de synthèse.

L'intérieur de l'habitacle des véhicules automobiles présentait initialement, en dehors des sièges et des banquettes, des surfaces dures, avec dans les dernières décennies, l'utilisation de matières plastique rigides. Un effort a été mené pour rendre les surfaces présentées aux occupants de l'habitacle souples et agréables au contact, notamment par l'introduction de mousses solides souples, comme du polyester ou du polyuréthane, recouvertes d'une fine coque qui peut être une pièce de plastique moulé déformable, une feuille de cuir, un tissu ou une étoffe. Ces éléments sont introduits sous la forme d'inserts composant des garnitures mises en place sur la chaîne de montage du véhicule et montées sur l'intérieur de la carrosserie métallique de celui-ci, par exemple dans les portières en dessous de l'espace des vitres, ou sur le tableau de bord.

Récemment, on a souhaité donner un aspect plissé à une étoffe, un tissu ou une peau qui serait utilisée pour recouvrir les surfaces de l'habitacle, car l'aspect plissé est attrayant pour l'utilisateur, et valorise le véhicule. Mais il n'est pas aisé de mettre en oeuvre une méthode de pose pour un tel recouvrement présentant un aspect plissé qui offrirait toutes les garanties nécessaires aux pièces d'habitacle, qui doivent résister aux grands nombres de sollicitations susceptibles d'être appliquées par les occupants, aux chocs et aux vibrations engendrés par le déplacement sur la route et aux conditions d'environnement qui peuvent être défavorables, puisqu'un véhicule peut être stationné ou rouler en étant exposé au froid et à l'humidité et que les portières sont parfois ouvertes alors que l'atmosphère est pluvieuse, laissant alors parfois entrer de l'eau. Le document FR3086225A1 divulgue un tel revêtement en matériau souple.

L'objectif de l'invention est donc de proposer, pour les pièces d'habitacle de véhicule, un revêtement en matériau souple qui présente un aspect plissé, et qui puisse revêtir toutes les formes complexes que l'on trouve dans un tel habitacle, incluant des concavités et des convexités, y compris en grande proximité les unes des autres sur une même pièce aux formes complexes. On souhaite que le revêtement soit très solidement fixé.

A cet effet, il est proposé un procédé de recouvrement pour décoration d'une pièce d'habitacle de véhicule, comprenant une mise en forme d'une surface pour décoration constituée dans un matériau souple de surface, et une lamination sur une pièce d'habitacle d'une nappe de recouvrement comprenant ladite surface pour décoration

Ces premières caractéristiques du procédé permettent l'utilisation de techniques industrielles courantes, avec par exemple l'utilisation d'une presse incluant une empreinte et un piston. Elles sont également compatibles avec l'utilisation d'une colle déposée par rouleau sur le revers de la nappe, pour sa fixation sur la pièce - ou insert.

Le procédé est particulier en ce qu'il comprend une préparation de bandes du matériau souple, une réalisation de rabats droits et rabats gauches sur les grands côtés desdites bandes, une réalisation d'une ligne de points de couture sur une longueur d'au moins un rabat droit et au moins un rabat gauche, ledit rabat gauche et ledit rabat droit étant rapprochés en face à face sous la surface pour décoration et étant solidarisés l'un à l'autre par les points de couture de la ligne, en sorte de participer à ladite mise en forme de la surface pour décoration, un plaquage des rabats solidarisés en utilisant la ligne de points de couture comme ligne de pivot, jusqu'à réalisation de ladite nappe de recouvrement avec un aspect plissé sur la surface pour décoration et une face arrière régulière pour la lamination sur la pièce d'habitacle, une colle thermofusible ou thermoréactive est préalablement enduite au dos d'une feuille du matériau souple sur toute la surface de celle-ci, les bandes étant ensuite formées et découpées dans ladite feuille en sorte de former des bandes encollées uniformément mais séparées les unes des autres. Un procédé alternatif comprend une mise en forme d'une surface pour décoration constituée dans un matériau souple de surface, et une lamination sur une pièce d'habitacle d'une nappe de recouvrement comprenant ladite surface pour décoration, une préparation de bandes du matériau souple, une réalisation de rabats droits et rabats gauches sur les grands côtés desdites bandes, une réalisation d'une ligne de points de couture sur une longueur d'au moins un rabat droit et au moins un rabat gauche, ledit rabat gauche et ledit rabat droit étant rapprochés en face à face sous la surface pour décoration et étant solidarisés l'un à l'autre par les points de couture de la ligne, en sorte de participer à ladite mise en forme de la surface pour décoration, un plaquage des rabats solidarisés en utilisant la ligne de points de couture comme ligne de pivot, jusqu'à réalisation de ladite nappe de recouvrement avec un aspect plissé sur la surface pour décoration et une face arrière régulière pour la lamination sur la pièce d'habitacle selon lequel, lors de l'étape de préparation des bandes de matériau souple, on découpe préalablement lesdites bandes dans une feuille dudit matériau souple, ladite feuille étant assemblée avec une couche de matériau de doublure sur l'une de ses faces.

Grâce à cette utilisation de bandes cousues, et d'un pliage le long d'une ligne de couture, il est possible d'épouser au mieux les formes complexes, convexes et concaves, de la pièce à recouvrir. La solidarisation par les rabats permet de plus, simultanément, une grande solidité de l'assemblage, tout en offrant l'attrait attendu pour l'utilisateur, qui observe une apparence plissée sur la surface de décoration, d'où l'image de qualité et de valeur qu'offre la pièce recouverte.

Diverses caractéristiques supplémentaires peuvent être prévues, seules ou en combinaison.
- Une direction de plaquage commune peut être utilisée pour plusieurs paires successives de rabats rapprochés en face à face et solidarisés.

L'aspect final est ainsi plus satisfaisant et le processus est plus facile à mettre en oeuvre.
- Les lignes de points de couture peuvent être rectilignes.
- Les lignes de point de couture peuvent être curvilignes.
- La pièce à recouvrir étant rigide, sous au moins deux desdites bandes, une pièce commune de matériau de doublure appliquée aux au moins deux bandes peut être intégrée à la nappe après ledit plaquage desdits rabats contre le matériau souple.
- La pièce à recouvrir étant rigide, sous une bande, une pièce de matériau de confort (519) associée de manière unique à ladite bande peut être maintenue sous une partie centrale de ladite bande avant pliage d'un rabat de ladite bande autour d'un bord de ladite pièce de matériau de doublure associée de manière unique à ladite bande, le plaquage étant effectué contre le matériau de doublure.

Dans ces deux variantes, un matériau de confort est mis en place sous forme d'une doublure pour molletonner la nappe. Il peut s'agir d'une mousse ou d'un textile en trois dimensions.
- Le matériau souple peut être un textile tissé, un textile non tissé ou un cuir.
- La pièce d'habitacle peut être un habillage de portière, un accoudoir, un médaillon ou une planche de tableau de bord, de véhicule automobile.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant plusieurs modes de réalisation de l'invention et dans lesquels :

- Les figures 1 à 7 sont des vues schématiques des différentes étapes d'un premier mode de réalisation de l'invention.

- Les figures 8 à 14 sont des vues schématiques des différentes étapes d'un deuxième mode de réalisation de l'invention.

Dans les modes de réalisation qui vont être présentés, on s'intéresse à la réalisation de plis dans un matériau souple formant au final une surface d'apparence élégante et luxueuse, aux fins de décoration, et à laquelle on associe un volume de mousse, ou de textile tridimensionnel (maille 3D), en second plan pour offrir un molletonné agréable au toucher et à l'appui pour les utilisateurs du véhicule. Ce molletonné n'est qu'optionnel, et l'invention s'applique sans son introduction.

Le **premier mode de réalisation** consiste en la réalisation de plis dans un assemblage de bandes de matériau souple sur lequel on n'a pas apposé de doublure (par exemple de mousse), celle-ci étant mise en place dans les dernières étapes du procédé.

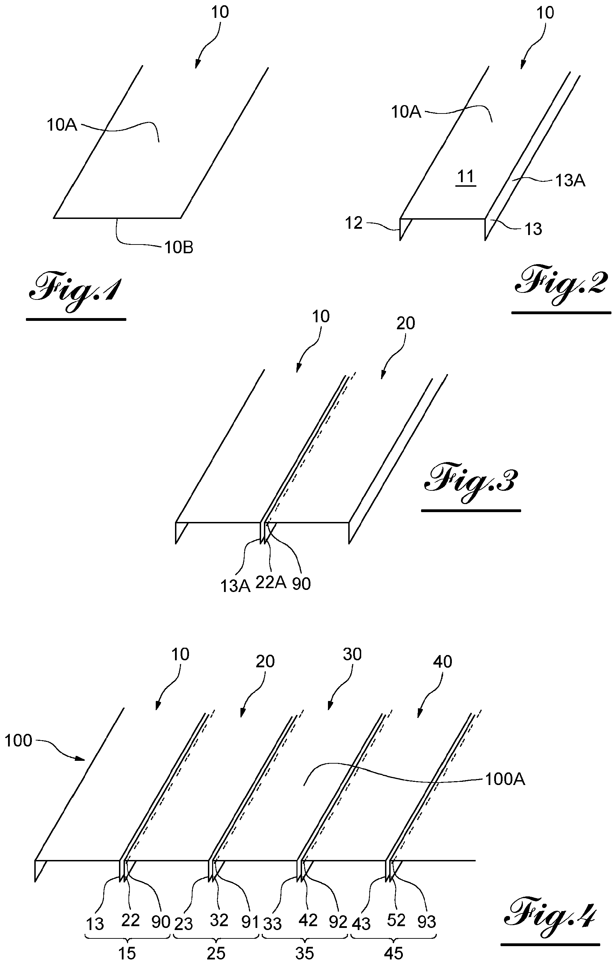

[Fig. 1] En figure 1, portant sur le premier mode de réalisation, on a représenté une première bande de matériau souple 10 se présentant sous la forme d'un long rectangle de fine épaisseur, dont l'une des surfaces est une surface de décoration 10A et l'autre surface, opposée est une surface de fixation 10B. Cette première bande peut avantageusement être obtenue par découpe dans une pièce plus grande, obtenue d'un fournisseur de tissu ou de cuir ou d'autres matériaux souples comme les microfibres, dont une surface a préalablement été encollée par une colle thermofusible ou thermoréactive qui, en l'absence de chaleur, est inactive et dans laquelle sont découpées plusieurs bandes. Les bandes utilisées sont libres les unes des autres, c'est-à-dire que l'étoffe, le textile ou le cuir a été totalement coupé, et qu'il n'existe plus de lien entre deux bandes. Les bandes peuvent alternativement être obtenues indépendamment les unes des autres.

La surface de décoration 10A est typiquement agréable au toucher et à un aspect attrayant pour le regard, alors que la surface de fixation 10B est adaptée à l'apposition sur un élément en plastique ou en un autre matériau, tel qu'un insert ou un élément de structure. Ainsi, il est avantageux qu'à ce stade, la surface de fixation 10B soit d'ores et déjà pourvue d'un revêtement de colle thermofusible.

Le terme bande est utilisé pour indiquer un rapport largeur sur longueur du rectangle très en faveur de la longueur, bien que l'invention s'applique également avec un rectangle peu allongé.

[Fig. 2] En figure 2 on a représenté le résultat d'une première étape de procédé appliquée à la première bande de matériau souple 10. Le traitement appliqué a consisté à rabattre, parallèlement à chacun des deux grands côtés du rectangle constituant la bande, deux parties de celle-ci, pour distinguer en celle-ci trois parties : une bande centrale 11, légèrement plus étroite que la première bande de matériau souple 10 prise bord à bord, et un rabat gauche 12 ainsi qu'un rabat droit 13, chacun étant maintenant délimité et relié à la bande centrale 11 par une charnière ou pli formé dans le matériau souple. Les rabats ne constituent qu'une petite partie de la première bande de matériau souple 10. On précise de plus que le matériau étant souple, le pli reste peu marqué à ce stade.

Sur la figure 2 on a repéré la surface du rabat droit 13 constituée par une partie de la surface de décoration 10A. Cette partie est appelée surface externe du rabat droit 13A.

[Fig. 3] En figure 3 on a représenté le résultat de l'étape suivante de traitement de la première bande de matériau souple 10. Celle-ci est rapprochée d'une bande de matériau souple 20 identique ou similaire, disposant d'un rabat gauche dit rabat gauche de la deuxième bande 22, lui-même pourvu d'une surface externe de rabat gauche 22A. La surface externe du rabat droit 13A et la surface externe du rabat gauche 22A sont apposées l'une contre l'autre sur toute leur longueur, les première et deuxième bandes de matériau souple 10 et 20 étant positionnées parallèlement l'une à l'autre dans un même plan. Le contact entre les deux surfaces peut être direct, ou indirect avec interposition d'une couche d'un matériau supplémentaire si nécessaire.

Ainsi la surface externe du rabat droit 13A et la surface externe du rabat gauche 22A sont superposées, leurs grands côtés étant superposés deux à deux et leurs petits côtés pouvant également l'être, sans pour autant que ce soit indispensable à la bonne réalisation du procédé, les première et deuxième bandes de matériau souple 10 et 20 n'ayant pas nécessairement la même longueur.

Une série de points de couture 90 est alors réalisée sur toute la longueur commune des rabat gauche 12 et rabat droit 13, en sorte d'immobiliser ou solidariser l'une par rapport à l'autre les première et deuxième bandes de matériau souple 10 et 20. Les points de couture forment une ligne, qui est positionnée à très grande proximité du pli qui était peu marqué, et elle remplace le pli dans la délimitation entre le rabat et la bande centrale.

Les points de couture de la série de points de couture 90 peuvent être des points individuels établis les uns alignés avec les autres ou des points d'une couture non interrompue s'étendant sur toute la longueur des deux rabats.

[Fig. 4] En figure 4 on a représenté une étape ultérieure du procédé, au cours de laquelle des bandes de matériau souple 30 et 40 ont été également fixées à la suite des deux premières bandes de matériau souple 10 et 20, du côté de la bande 20.

Ainsi selon le principe précédemment présenté, le rabat droit 13 et le rabat gauche de la deuxième bande 22 ont formé un double rabat cousu 15. Le rabat droit 23 et le rabat gauche 32, ayant subi une autre série de points de couture 91 ont formé un deuxième double rabat cousu 25. De la même manière un autre double rabat cousu 35 est constitué avec les rabats 33 et 42 ayant subi une autre série de points de couture 92, et un double rabat cousu 45 est constitué avec les rabats 43 et 52 ayant subi une autre série de points de couture 93.

Ainsi, au stade de la figure 4 on observe la formation d'une nappe 100 (ou décor plissé) constituée de l'assemblage des bandes de matériau souple 10, 20, 30, 40 et d'autres bandes qui peuvent être mises en place de la même manière et rattachées par une série de points de couture. La nappe 100 présente sur l'une de ses faces une surface de décoration 100A constituée de l'assemblage des surfaces de décoration des bandes centrales de chacune des bandes de matériau souple 10, 20, 30, 40 etc. Sur sa face opposée, la nappe 100 présente une surface de laquelle dépassent les doubles rabats cousus 15, 25, 35, 45 etc.

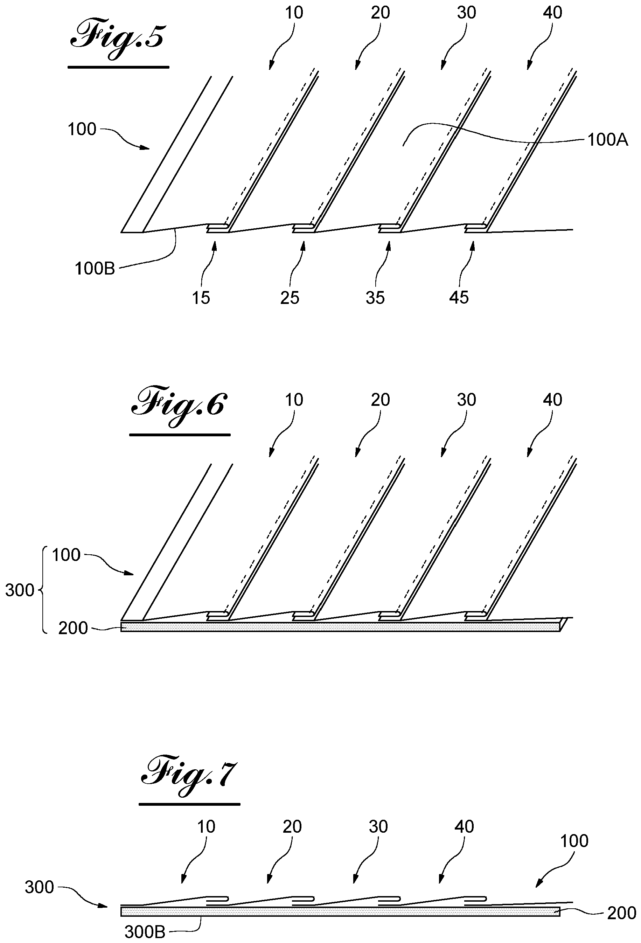

[Fig. 5] En figure 5 on représente la suite des opérations. La nappe fait l'objet d'un balayage ou d'un brossage homogène dans une direction unique, en sorte de rabattre ou coucher chacun des doubles rabats cousus 15, 25, 35, 45 de manière similaire, avec rotation de ce rabat le long des lignes de points de couture reliant les rabats de chacune des bandes de matériau souple avec sa bande centrale.

Ainsi, la nappe 100 (ou décor plissé) se retrouve mise à plat, avec apparition d'un effet plissé sur la surface de décoration 100A, chacun des doubles rabats cousus 15, 25, 35, 45 étant plaqué contre la surface de fixation de la bande centrale adjacente, l'orientation donnée au mouvement étant la même pour chacune des bandes. Entre deux bandes, l'ouverture d'un pli est visible sur la face de décoration, mais le pli est maintenu fermé par la série de points de couture sur toute la longueur des bandes. Sur la face opposée, une surface de fixation 100B est formée. Elle est régulière et compatible avec une lamination ultérieure, car les rabats sont plaqués. Ils peuvent être même collés contre la face arrière des bandes centrales, à l'aide d'une colle appliquée préalablement, comme commenté en relation avec la figure 1. Il est possible d'utiliser la nappe comme telle, sans procéder aux étapes qui vont être décrites en figures 6 et 7, mais celles-ci sont aussi intéressantes.

[Fig. 6] En figure 6 on a représenté l'étape ultérieure du processus, par laquelle la nappe 100 est collée sur une pièce de mousse unique 200 pour former une nappe consolidée 300 (qui va servir finalement de nappe de recouvrement pour la pièce automobile), cette étape d'assemblage s'apparentant à une lamination. La pièce de mousse est une pièce plate unique, d'épaisseur modeste par rapport aux dimensions de la nappe 100, dont une dimension dans son plan est du même ordre de grandeur que la longueur des bandes, et l'autre dimension est du même ordre de grandeur que la somme des largeurs des bandes centrales. Il s'agit d'une mousse polyéthylène ou polyuréthane. Elle a été découpée initialement dans une réserve de couche de mousse de confort, et ses dimensions latérales sont adaptées à l'utilisation finale qui doit être faite, sur la pièce d'habitacle - ou insert - à recouvrir. La pièce de mousse unique 200 peut de plus être encollée sur sa face qui vient en contact avec la nappe 100, avec une colle thermofusible, pour permettre l'assemblage avec la nappe 100. La colle thermofusible ou thermoréactive présente sur l'une ou l'autre des deux surfaces assemblées, à savoir la face de fixation 100B et la surface de la pièce de mousse unique 200, ou sur les deux surfaces est activée par l'application de chaleur, en sorte de solidariser les deux éléments. A la place de la mousse, un textile tridimensionnel peut être utilisé. La mousse ou le textile tridimensionnel sont des matériaux de doublure (ils épaississent la nappe) et aussi des matériaux de confort : ils offrent un accueil agréable de type rembourrage pour le passager.

À l'issue de cette étape de collage, une découpe de la nappe consolidée 300 ou nappe de recouvrement est effectuée en tant que besoin pour définir des contours, rectilignes ou curvilignes, dans son plan, en fonction de sa destination.

[Fig. 7] La figure 7 montre en coupe le résultat du processus : on dispose d'une pièce de mousse unique 200 (ou de textile tridimensionnel) sur laquelle est fixée une nappe 100 d'aspect plissé montrant sur la face opposée à la mousse une surface de décoration plaisante pour l'utilisateur. Les points de couture sont invisibles pour l'utilisateur, cachés sous le matériau souple replié.

Le procédé est poursuivi par l'application d'une dépose de colle thermofusible ou thermoréactive par rouleau sur la face de fixation 300B de la nappe consolidée, c'est-à-dire la face de mousse. Puis on procède à l'application du décor encollé sur la pièce d'habitacle ou forme automobile - ou insert - à l'aide d'une presse de laminage et d'un outil spécifique permettant de recevoir le format et l'insert à décorer. L'outil est composé de deux parties : une partie basse femelle fixe conformée pour recevoir le décor et une partie mâle conformée pour recevoir l'insert à recouvrir, et disposée sur un piston. La presse est ouverte, puis il y a mise en place et positionnement de la nappe consolidée 300 sur le plateau fixe, et mise en place de l'insert à décorer sur le plateau mobile positionné en partie haute de la presse. La colle est activée par application de rayons infra rouge sur la nappe consolidée 300, et on descend le plateau mobile pour mise en contact et pressage. Après refroidissement l'adhésion du décor sur insert est obtenue, et on remonte le plateau mobile, puis on retire l'insert portant son recouvrement.

Le **deuxième mode de réalisation,** qui va maintenant être présenté, consiste en la réalisation de plis dans un assemblage de bandes de matériau souple (ou décor) au dos duquel une doublure de mousse ou de textile tridimensionnel est présente d'emblée.

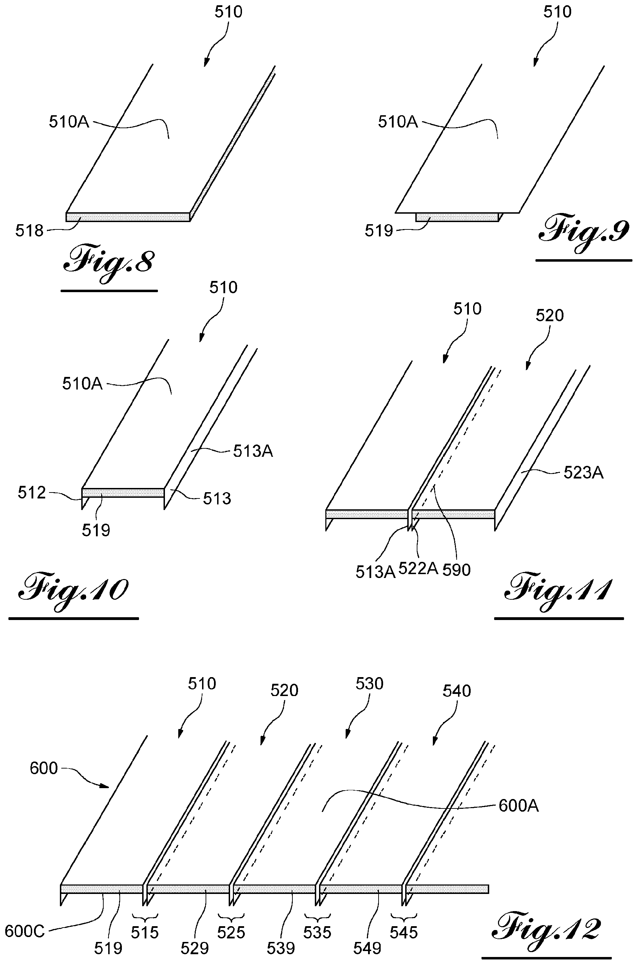

[Fig. 8] En figure 8, on a représenté la première étape de ce deuxième mode de réalisation de l'invention.

La bande de matériau souple 510 comporte une surface de décoration 510A et sur sa face opposée un recouvrement complet de mousse 518, immobilisée et par exemple collée sur toute sa surface, de manière uniforme. Le recouvrement complet de mousse 518 couvre, dans la variante présentée, l'ensemble de la face opposée à la surface de décoration 510A et s'interrompt au droit de ses bord, par exemple parce que la bande de matériau souple a été découpée dans une nappe composée d'un assemblage d'une couche de mousse et d'une feuille de matériau souple. La mousse peut être une mousse polyuréthane ou polyéthylène, et elle peut être remplacée par un textile tridimensionnel. La face visible du matériau de doublure (ou molletonné) peut être d'ores et déjà encollée.

[Fig. 9] A la figure 9 on présente une étape ultérieure du procédé. Le recouvrement complet de mousse 518 (ou de textile) fait l'objet de découpes parallèles aux grands côtés de la bande de matériau souple 510 sur chacun des 2 grands côtés, et les fines bandes latérales ainsi découpées sont détachées, par exemple décollées, du matériau souple. Ainsi une partie de la face de la bande de matériau souple 510 opposée à la surface de décoration est mise à nu, étant dégagée de la mousse découpée du recouvrement complet de mousse 518, qui est écartée du procédé, évacuée et éventuellement utilisée à d'autres fins ou recyclée. La largeur de mousse enlevée est, de chaque côté, supérieure à l'épaisseur du recouvrement complet de mousse 518.

La mousse restante est référencée comme couche centrale de mousse 519. Elle a une largeur légèrement plus faible que la bande de matériau souple 510, prise bord à bord. Il est possible aussi de prévoir que son épaisseur n'est pas constante : elle peut par exemple être biseautée, créant au final une inclinaison entre deux plus du produit fini.

[Fig. 10] En figure 10 on a représenté l'étape ultérieure du procédé de fabrication. Parallèlement à chacun des deux grands côtés de la bande de matériau souple 510, des rabat gauche 512 et rabat droit 513 sont formés par pliage de la bande de matériau souple, le long de la couche centrale de mousse 519 (ou textile), en s'appuyant éventuellement sur le bord de celle-ci, et vers la face de la bande de matériau souple dans lequel celle-ci est située. Les rabats ne sont néanmoins pas plaqués contre la bande et restent libres. Le pli n'est marqué que modérément, du fait du caractère souple du matériau. Comme la largeur de ces rabats est définie par la largeur de mousse qui avait été enlevée, les rabats, s'ils sont maintenus perpendiculairement à la bande, dépassent chacun de l'épaisseur de la couche de mousse centrale 518.

[Fig. 11] En figure 11 on a représenté l'étape ultérieure du processus par laquelle une deuxième bande de matériau souple 520 identique ou similaire à la bande de matériau souple 510, mais libre par rapport à la bande 510, est rapprochée de celle-ci par leurs rabats respectifs, et plus précisément par la surface externe de rabat droit 513A et la surface externe de rabat gauche 522A, qui sont mis face à face. Une ligne de points de couture 590 est effectuée de manière similaire à ce qui avait été décrit au premier mode de réalisation pour solidariser les rabats, mais elle est menée sur la partie des rabats qui dépasse de l'épaisseur de la couche centrale de mousse ou textile tridimensionnel 519, juste sous la surface de ce matériau de doublure. On précise que la deuxième bande de matériau souple comporte une autre couche centrale de mousse 529 de la même manière que la première bande, et que les points de couture sont placés de la même manière vis-à-vis de cette autre couche centrale de mousse.

[Fig. 12] En figure 12, on a représenté une étape ultérieure du procédé, au cours de laquelle des bandes de matériau souple 530 et 540 similaires aux deux premières bandes ont été également fixées à la suite des deux premières bandes de matériau souple 510 et 520, du côté de la bande 520.

Ainsi selon les principes précédemment présentés un double rabat cousu 515 et des autres doubles rabats cousus 525, 535 et 545 sont constitués avec les rabats et des points de couture.

Ainsi, au stade de la figure 12 on observe la formation d'une nappe temporaire 600 constituée de l'assemblage des bandes de matériau souple 510, 520, 530, 540 et d'autres bandes. La nappe temporaire 600 présente sur l'une de ses faces une surface de décoration 600A constituée de l'assemblage des surfaces de décoration. Sur sa face opposée, la nappe temporaire 600 présente une surface temporaire 600C de laquelle dépassent les doubles rabats cousus 515, 525, 535, 545 etc.

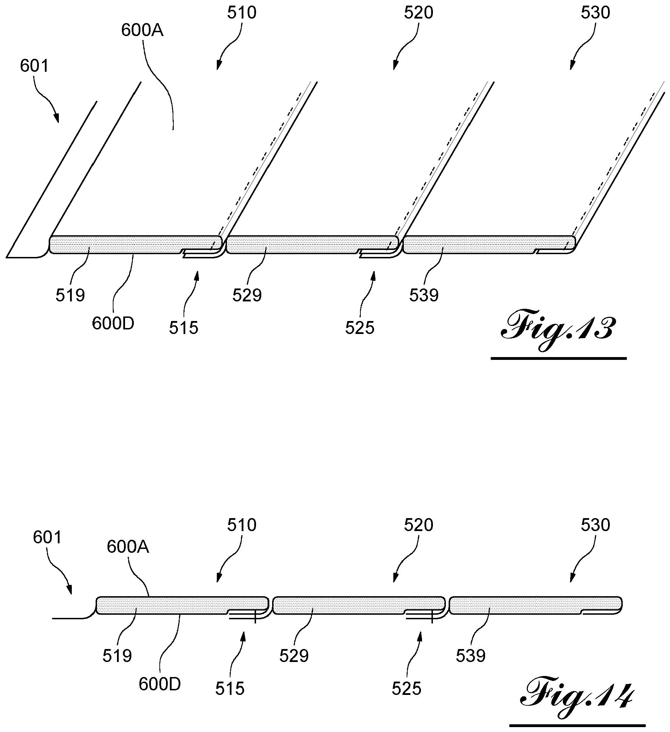

[Fig. 13] En figure 13, on a représenté le résultat du balayage, couchage ou plaquage des rabats, dans une direction unique, contre la surface temporaire 600C, formant une surface de fixation finale 600D, et résultant en une nappe 601 (nappe finale, ou nappe de recouvrement). La surface de fixation finale 600D est régulière, stable et adaptée à la lamination sur une pièce d'habitacle. Les rabats entourent et couvrent la partie la plus externe de la mousse (ou textile), sous chacune de bandes, d'un unique côté de chacune des bandes - sur les figures, il s'agit du côté le plus à droite de chacune des bandes. Ainsi, il y a pliage d'un rabat de ladite bande autour de ladite pièce de matériau de doublure, et la ligne de points de couture constitue le point de rotation, bien défini et rendant le montage ferme et solide. A l'inverse, sur le côté gauche, la mousse reste découverte, le rabat étant entraîné, par sa couture, avec le rabat recouvrant la mousse de la bande voisine. C'est ainsi les doubles rabats 515, 525, ... qui sont pliés le long de la ligne de couture.

Sur la surface de décoration 600A, un aspect plissé est visible pour l'utilisateur, et les points de couture sont cachés par le tissu replié.

[Fig. 14] La figure 14 montre en coupe le résultat du processus : on dispose d'un assemblage de pièces de mousse (ou textile) 519, 529, etc. enrobées avec le matériau souple et cousues les unes aux autres par leurs grands côtés respectifs. L'ensemble porte l'aspect plissé montrant sur la face opposée à la mousse une surface de décoration plaisante pour l'utilisateur. Si l'épaisseur de la couche centrale de mousse 519 n'est pas constante, un relief ou une inclinaison peut être introduit dans la surface de décoration 600A.

Le procédé est poursuivi par l'application d'une colle thermofusible ou thermoréactive sur la face de fixation finale 600D de la nappe de recouvrement ou nappe finale 601. Puis on procède à l'application du décor encollé sur la pièce d'habitacle ou forme automobile - ou insert - à l'aide de la presse et de l'outil spécifique évoqués précédemment.

De manière générale, les points de couture peuvent être remplacés, aux fins de solidariser les rabats adjacents, par des agrafes, ou encore l'utilisation d'une colle, ou encore l'utilisation de clips, sans remettre en cause les principes de l'invention.

Grâce aux modes de réalisation présentés, il est possible d'épouser toute forme extérieure de pièce d'habitacle ou forme automobile - ou insert, convexe ou concave, voire présentant à la fois des convexités et des concavités. En particulier, l'invention s'applique aux habillages de portières de véhicules automobiles, ainsi qu'aux planches de tableaux de bord.

Également grâce aux modes de réalisation présentés, il est possible d'économiser la quantité de matériau souple utilisé, qui peut être un textile ou un cuir à haute valeur ajoutée, pour fournir au produit final un aspect de qualité. L'invention, quand elle utilise du cuir, permet aussi d'utiliser des pièces de cuir de petites tailles, plus disponibles que des pièces de cuir de grandes tailles.

### Liste des signes de référence

10 bande de matériau souple
10A surface de décoration
10B surface de fixation
11 bande centrale
12 rabat gauche
13 rabat droit
13A surface externe de rabat droit
22 rabat gauche de la deuxième bande
22A surface externe de rabat gauche
23, 33, 43 autres rabats droits
32, 42 autres rabats gauche
90 série de points de couture
91, 92, 93 autres séries de points de couture
15 double rabat cousu
25 deuxième double rabat cousu
35, 45 autres doubles rabats cousus
100 nappe
100A surface de décoration
200 pièce de mousse unique
300 nappe consolidée
510 bande de matériau souple
510A surface de décoration
512 rabat gauche
513 rabat droit
515 double rabat cousu
525, 535, 545 autres doubles rabats cousus
518 recouvrement complet de mousse
519 couche centrale de mousse
529, 539, 549 autres couches centrales de mousse
522A surface externe de rabat gauche
600 nappe temporaire
600A surface de décoration
600C surface temporaire
600D surface de fixation finale
601 nappe finale

## Revendications

1. Procédé de recouvrement pour décoration d'une pièce d'habitacle de véhicule, comprenant une mise en forme d'une surface pour décoration (100A ; 600A) constituée dans un matériau souple de surface, et une lamination sur une pièce d'habitacle d'une nappe de recouvrement (300 ; 601) comprenant ladite surface pour décoration (100A ; 600A), le procédé comprenant une préparation de bandes (10, 20,... ; 510, 520) du matériau souple, une réalisation de rabats droits et rabats gauches (12, 13, 22, 23, ... ; 512, 513, 522, 523, ...) sur les grands côtés desdites bandes, une réalisation d'une ligne de points de couture sur une longueur d'au moins un rabat droit (13 ; 513) et au moins un rabat gauche (22 ; 522), ledit rabat gauche et ledit rabat droit étant rapprochés en face à face sous la surface pour décoration et étant solidarisés l'un à l'autre par les points de couture de la ligne, en sorte de participer à ladite mise en forme de la surface pour décoration (100A ; 600A), un plaquage des rabats solidarisés en utilisant la ligne de points de couture comme ligne de pivot, jusqu'à réalisation de ladite nappe de recouvrement (300 ; 601) avec un aspect plissé sur la surface pour décoration et une face arrière régulière pour la lamination sur la pièce d'habitacle le procédé étant **caractérisé en ce qu'** une colle thermofusible ou thermoréactive est préalablement enduite au dos d'une feuille du matériau souple sur toute la surface de celle-ci, les bandes (10, 20, 30, 40) étant ensuite formées et découpées dans ladite feuille en sorte de former des bandes encollées uniformément mais séparées les unes des autres.

2. Procédé de recouvrement selon la revendication 1, **caractérisé en ce que** la pièce à recouvrir étant rigide, sous au moins deux desdites bandes, une pièce commune de matériau de doublure (200) appliquée aux au moins deux bandes est intégrée à la nappe après ledit plaquage desdits rabats contre le matériau souple.

3. Procédé de recouvrement pour décoration d'une pièce d'habitacle de véhicule, comprenant une mise en forme d'une surface pour décoration (100A ; 600A) constituée dans un matériau souple de surface, et une lamination sur une pièce d'habitacle d'une nappe de recouvrement (300 ; 601) comprenant ladite surface pour décoration (100A ; 600A), le procédé comprenant une préparation de bandes (10, 20,... ; 510, 520) du matériau souple, une réalisation de rabats droits et rabats gauches (12, 13, 22, 23, ... ; 512, 513, 522, 523, ...) sur les grands côtés desdites bandes, une réalisation d'une ligne de points de couture sur une longueur d'au moins un rabat droit (13 ; 513) et au moins un rabat gauche (22 ; 522), ledit rabat gauche et ledit rabat droit étant rapprochés en face à face sous la surface pour décoration et étant solidarisés l'un à l'autre par les points de couture de la ligne, en sorte de participer à ladite mise en forme de la surface pour décoration (100A ; 600A), un plaquage des rabats solidarisés en utilisant la ligne de points de couture comme ligne de pivot, jusqu'à réalisation de ladite nappe de recouvrement (300 ; 601) avec un aspect plissé sur la surface pour décoration et une face arrière régulière pour la lamination sur la pièce d'habitacle, le procédé étant **caractérisé en ce que**, selon lequel, lors de l'étape de préparation des bandes (510, 520, 530, 540) de matériau souple, on découpe préalablement lesdites bandes dans une feuille dudit matériau souple, ladite feuille étant assemblée avec une couche de matériau de doublure sur l'une de ses faces.

4. Procédé de recouvrement selon la revendication 3, **caractérisé en ce que**, la pièce à recouvrir étant rigide, sous une bande, une pièce de matériau de doublure (519) associée de manière unique à ladite bande est maintenue sous une partie centrale de ladite bande avant pliage d'un rabat (515) de ladite bande autour d'un bord de ladite pièce de matériau de doublure associée de manière unique à ladite bande, le plaquage étant effectué contre le matériau de doublure.

5. Procédé de recouvrement selon l'une des revendications 1 à 4, **caractérisé en ce qu'**une direction de plaquage commune est utilisée pour plusieurs paires successives de rabats rapprochés en face à face et solidarisés.

6. Procédé de recouvrement selon l'une des revendications 1 à 5, **caractérisé en ce que** les lignes de points de couture sont rectilignes.

7. Procédé de recouvrement selon l'une des revendications 1 à 5, **caractérisé en ce que** les lignes de point de couture sont curvilignes.

8. Procédé de recouvrement selon l'une des revendications 1 à 7, **caractérisé en ce que** le matériau souple est un textile tissé, un textile non tissé ou un cuir.

9. Procédé de recouvrement selon l'une des revendications 1 à 8, **caractérisé en ce que** la pièce d'habitacle est un habillage de portière, un accoudoir, un médaillon ou une planche de tableau de bord, de véhicule automobile.

## Patentansprüche

1. Abdeckverfahren zur Dekoration eines Fahrzeuginnenraumteils, umfassend ein Formen einer Dekorfläche (100A; 600A), die aus einem flexiblen Oberflächenmaterial besteht, und ein Laminieren einer Abdeckmatte (300; 601), umfassend die Dekorfläche (100A; 600A), auf ein Fahrzeuginnenraumteil, das Verfahren umfassend ein Vorbereiten von Streifen (10, 20, ...; 510, 520) des flexiblen Materials, Herstellen von rechten und linken Klappen (12, 13, 22, 23, ...; 512, 513, 522, 523, ...) an den langen Seiten der Streifen, Ausführen einer Linie von Nähstichen entlang einer Länge von mindestens einer rechten Klappe (13; 513) und mindestens einer linken Klappe (22; 522), wobei die linke und die rechte Klappe unter der Dekorfläche einander gegenüberliegend angenähert und durch die Nähstiche der Linie miteinander verbunden werden, sodass sie an der Formgebung der Dekorfläche (100A, 600A) beteiligt sind, Anpressen der zusammengefügten Klappen unter Verwendung der Stichlinie als Drehpunktlinie, bis die Abdeckmatte (300; 601) mit einem plissierten Aussehen auf der Dekorfläche und einer gleichmäßigen Rückseite zum Laminieren auf das Fahrzeuginnenraumteil ausgeführt ist, wobei das Verfahren **dadurch gekennzeichnet ist, dass** ein Heißschmelzklebstoff oder ein thermoreaktiver Klebstoff zuvor auf die Rückseite eines Bogens des flexiblen Materials über dessen gesamte Oberfläche aufgetragen wird, wobei die Streifen (10, 20, 30, 40) anschließend geformt und aus dem Bogen geschnitten werden, um gleichmäßig verklebte, aber voneinander getrennte Streifen zu bilden.

2. Abdeckverfahren nach Anspruch 1, **dadurch gekennzeichnet, dass** das zu abzudeckende Teil starr ist, wobei unter mindestens zwei der Streifen ein gemeinsames Futtermaterialteil (200), das auf die mindestens zwei Streifen aufgebracht wird, nach Anpressen der Klappen gegen das flexible Material in die Matte integriert ist.

3. Abdeckverfahren zur Dekoration eines Fahrzeuginnenraumteils, umfassend ein Formen einer Dekorfläche (100A; 600A), die aus einem flexiblen Oberflächenmaterial besteht, und ein Laminieren einer Abdeckmatte (300; 601), umfassend die Dekorfläche (100A; 600A), auf ein Fahrzeuginnenraumteil, das Verfahren umfassend ein Vorbereiten von Streifen (10, 20, ...; 510, 520) des flexiblen Materials, Herstellen von rechten und linken Klappen (12, 13, 22, 23, ...; 512, 513, 522, 523, ...) an den langen Seiten der Streifen, Ausführen einer Linie von Nähstichen entlang einer Länge von mindestens einer rechten Klappe (13; 513) und mindestens einer linken Klappe (22; 522), wobei die linke und die rechte Klappe unter der Dekorfläche einander gegenüberliegend angenähert und durch die Nähstiche der Linie miteinander verbunden werden, sodass sie an der Formgebung der Dekorfläche (100A, 600A) beteiligt sind, Anpressen der zusammengefügten Klappen unter Verwendung der Stichlinie als Drehpunktlinie, bis die Abdeckmatte (300; 601) mit einem plissierten Aussehen auf der Dekorfläche und einer gleichmäßigen Rückseite zum Laminieren auf das Fahrzeuginnenraumteil ausgeführt ist, wobei das Verfahren **dadurch gekennzeichnet ist, dass** bei dem Schritt eines Vorbereitens der Streifen (510, 520, 530, 540) aus flexiblem Material die Streifen zuvor aus eine Bogen aus dem flexiblen Material geschnitten werden, wobei der Bogen auf einer seiner Seiten mit einer Schicht aus Futtermaterial zusammengefügt wird.

4. Abdeckverfahren nach Anspruch 3, **dadurch gekennzeichnet, dass**, da das abzudeckende Teil starr ist, unter einem Streifen ein Futtermaterialteil (519), das eindeutig mit dem Streifen assoziiert ist, unter einem mittleren Abschnitt des Streifens gehalten wird, bevor eine Klappe (515) des Streifens um eine Kante des Futtermaterialteils, das eindeutig mit dem Streifen assoziiert ist, gefaltet wird, wobei das Anpressen gegen das Futtermaterial durchgeführt wird.

5. Abdeckverfahren nach einem der Ansprüche 1 bis 4, **dadurch gekennzeichnet, dass** eine gemeinsame Anpressrichtung für mehrere aufeinanderfolgende Paare von Klappen verwendet wird, die einander gegenüberliegend angenähert und fest miteinander verbunden sind.

6. Abdeckverfahren nach einem der Ansprüche 1 bis 5, **dadurch gekennzeichnet, dass** die Linien der Nähstiche geradlinig sind.

7. Abdeckverfahren nach einem der Ansprüche 1 bis 5, **dadurch gekennzeichnet, dass** die Stichlinien krummlinig sind.

8. Abdeckverfahren nach einem der Ansprüche 1 bis 7, **dadurch gekennzeichnet, dass** das flexible Material ein gewebtes Textil, ein nicht gewebtes Textil oder ein Leder ist.

9. Abdeckverfahren nach einem der Ansprüche 1 bis 8, **dadurch gekennzeichnet, dass** das Innenraumteil eine Türverkleidung, eine Armlehne, ein Medaillon oder ein Armaturenbrett eines Kraftfahrzeugs ist.

## Claims

1. A covering method for decorating a vehicle passenger compartment part, comprising shaping a surface for decoration (100A; 600A) made of a flexible surface material, and laminating, on a passenger compartment part, a covering web (300; 601) comprising said surface for decoration (100A; 600A), the method comprising preparing strips (10, 20,...; 510, 520) of the flexible material, producing right flaps and left flaps (12, 13, 22, 23, ...; 512, 513, 522, 523, ...) on the long sides of said strips, producing a line of stitches over a length of at least one right flap (13; 513) and at least one left flap (22; 522), said left flap and said right flap being brought together face to face under the surface for decoration and being secured to one another by the stitches of the line, so as to participate in said shaping of the surface for decoration (100A; 600A), flattening the secured flaps using the line of stitches as a pivot line, until said covering web (300; 601) is produced with a pleated appearance on the surface for decoration and a regular rear face is produced for lamination on the passenger compartment part, the method being **characterized in that** a hot-melt or heat-reactive glue is coated beforehand on the back of a sheet of flexible material over the entire surface thereof, the strips (10, 20, 30, 40) then being formed and cut in said sheet so as to form strips which are uniformly glued but separated from one another.

2. The covering method according to claim 1, **characterized in that** the part to be covered being rigid, under at least two of said strips, a common piece of lining material (200) applied to the at least two strips is integrated into the web after said pressing of said flaps against the flexible material.

3. A covering method for decorating a vehicle passenger compartment part, comprising shaping a surface for decoration (100A; 600A) made of a flexible surface material, and laminating, on a passenger compartment part, a covering web (300; 601) comprising said surface for decoration (100A; 600A), the method comprising preparing strips (10, 20,...; 510, 520) of the flexible material, producing right flaps and left flaps (12, 13, 22, 23, ...; 512, 513, 522, 523, ...) on the long sides of said strips, producing a line of stitches over a length of at least one right flap (13; 513) and at least one left flap (22; 522), said left flap and said right flap being brought together face to face under the surface for decoration and being secured to one another by the stitches of the line, so as to participate in said shaping of the surface for decoration (100A; 600A), flattening the secured flaps using the line of stitches as a pivot line, until said covering web (300; 601) is produced with a pleated appearance on the surface for decoration and a regular rear face is produced for lamination on the passenger compartment part, the method being **characterized in that**, according to which, during the step of preparing the strips (510, 520, 530, 540) of flexible material, said strips are cut beforehand in a sheet of said flexible material, said sheet being assembled with a layer of lining material on one of its faces.

4. The covering method according to claim 3, **characterized in that**, the part to be covered being rigid, under a strip, a lining material part (519) associated only with said strip is held under a central portion of said strip before folding a flap (515) of said strip around an edge of said lining material part associated only with said strip, pressing it against the lining material.

5. The covering method according to one of claims 1 to 4, **characterized in that** a common pressing direction is used for several successive pairs of flaps brought together face to face and secured to one another.

6. The covering method according to one of claims 1 to 5, **characterized in that** the lines of stitches are rectilinear.

7. The covering method according to one of claims 1 to 5, **characterized in that** the lines of stitches are curved.

8. The covering method according to one of claims 1 to 7, **characterized in that** the flexible material is a woven textile, a non-woven textile or a leather.

9. The covering method according to one of claims 1 to 8, **characterized in that** the passenger compartment part is a door trim, an armrest, a medallion or a dashboard panel, of a motor vehicle.
